# EUROPEAN PATENT APPLICATION

(11) **EP 1 344 696 A1**
(43) Date of publication of application: **17.09.2003**
(21) Application number: 03005177.5
(22) Date of filing: 07.03.2003
(51) Int. Cl.: B60R 21/34

(54) **Method of controlling a bonnet movement unit of a vehicle for the safety of pedestrians in case of collision with the front bumper of the vehicle**

(30) Priority: 08.03.2002 IT TO20020203
(71) Applicant: C.R.F. Società Consortile per Azioni, 10043 Orbassano (TO) (IT)
(72) Inventor: Gobetto, Enrico, 10060 Frossasco (IT); Zanella, Alessandro, 10136 Torino (IT)
(74) Representative: Cerbaro, Elena, Dr.

(57) **Abstract**

Described herein is a method of controlling a bonnet movement unit (2) of a vehicle (1) for the safety of pedestrians in case of collision with a front bumper (9) of the vehicle (1), which is provided with a plurality of sensors (11) arranged along the bumper (9). The method comprises the steps of determining whether a sensor (11) has been affected by a collision that could potentially require the activation of the bonnet movement unit (2) or by a collision which does not require the activation of the bonnet movement unit (2); opening a first monitoring time window of specified duration if a sensor (11) has been affected by a collision that could potentially require the activation of the bonnet movement unit (2); determining whether other sensors (11) have been affected, within the first monitoring time window, by a collision that could potentially require the activation of the bonnet movement unit (2) or by a collision which does not require the activation of the bonnet movement unit (2); and activating the bonnet movement unit (2) if the first monitoring time window expires without other sensors (11) being affected by a collision which does not require the activation of the bonnet movement unit (2) and without other sensors (11) being affected by a collision that could potentially require the activation of the bonnet movement unit (2).

## Description

The present invention relates to a method of controlling a bonnet movement unit of a vehicle for the safety of pedestrians in case of collision with a front bumper of the vehicle.

It is known that, if a motor vehicle strikes a pedestrian frontally, the pedestrian normally collides with the bonnet, following the impact on the front bumper of the motor vehicle.

To prevent the collision with the bonnet from causing serious injury to the pedestrian, it has been considered necessary to reduce the collision forces as much as possible in case of accident, and consequently to reduce the acceleration of the pedestrian against the bonnet.

This requirement can be met by providing an empty space between the bonnet and the components housed in the engine compartment covered by the said bonnet, in such a way that the sheet metal from which the bonnet is made can be deformed in an essentially free way, thus mitigating the impact of the pedestrian. For example, in the case of a motor vehicle travelling at a speed of 40 kilometers per hour, it is desirable to leave a space of at least 80 millimeters between the bonnet and the components housed in the engine compartment.

In order to generate an empty space under the bonnet, solutions have been proposed in which the motor vehicle is provided with a bonnet movement unit, with the purpose of moving the bonnet, when a collision occurs, from a position in which it covers the engine compartment to a raised position. An example of a bonnet movement unit is described in Italian patent application TO2000A001030 filed on 31/10/2000 in the name of the present applicant.

The collision is detected by means of a sensor device positioned on the front bumper of the motor vehicle and supplying a contact signal indicating the occurrence of a collision with the bumper, this signal being supplied to the electronic control unit of the motor vehicle, which proceeds to activate the bonnet movement unit after the detection of the collision.

However, the solutions proposed hitherto suffer from a drawback that makes it impossible to enjoy all of their benefits. In particular, the solutions proposed hitherto suffer from the drawback that the bonnet movement unit is activated by the electronic control unit of the motor vehicle even as a result of the detection of impacts with the front bumper of the motor vehicle other than those for which the movement unit is required to be activated, and this causes undesired activations of the said movement unit.

The object of the present invention is therefore to provide a method of controlling a bonnet movement unit of a vehicle which enables at least some of the previously described drawbacks to be overcome.

According to the present invention, a method of controlling a bonnet movement unit of a vehicle is provided, as described in Claim 1.

To enable the present invention to be understood more clearly, a preferred embodiment thereof will now be described, purely by way of example, without restrictive intent, and with reference to the attached drawings, in which:
- Figure 1 shows schematically a motor vehicle provided with a bonnet movement unit;
- Figure 2 shows a piezoelectric sensor for detecting collisions of the motor vehicle of Figure 1;
- Figure 3 shows a graph representing the variation with time of a signal outputted by the piezoelectric sensor of Figure 2 after an impulse collision;
- Figure 4 shows a block diagram relating to the method of controlling the bonnet movement unit according to the invention;
- Figure 5 shows a first flowchart relating to the control method according to the invention;
- Figure 6 shows the variation with time of a quantity used in the control method according to the invention;
- Figure 7 shows a second flowchart relating to the control method according to the invention; and
- Figure 8 shows a third flowchart relating to the control method according to the invention.

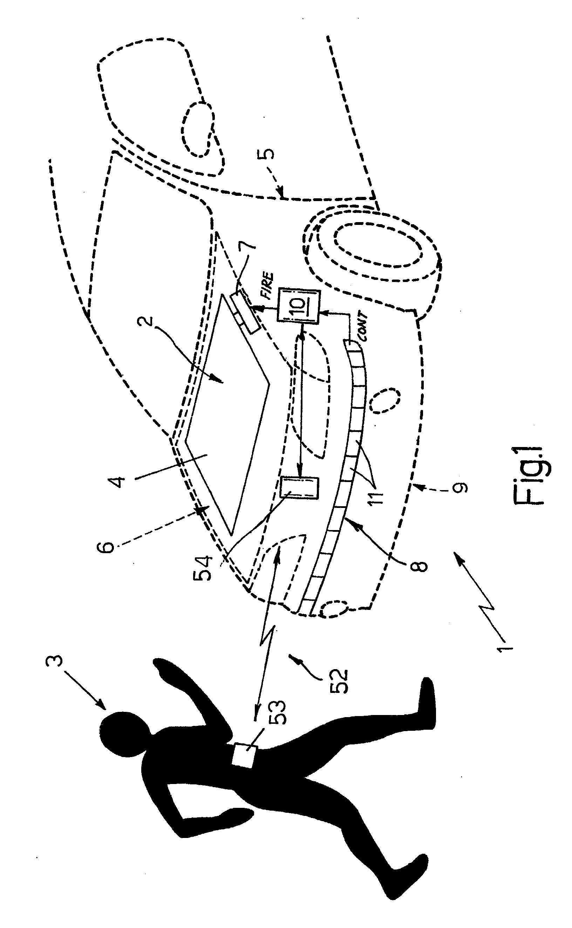

With reference to Figure 1, the number 1 indicates the whole of a motor vehicle provided with a bonnet movement unit 2 for the safety of pedestrians 3 in case of their frontal collision with the said motor vehicle 1.

In particular, the bonnet movement unit 2 is a known device (and therefore is not described in detail) and can preferably, but not necessarily, be made as indicated in the previously cited Italian patent application, in other words in the form of a four-bar linkage device 4 interposed between the frame 5 and the bonnet 6 of the motor vehicle 1, and an actuator device 7 for moving the four-bar linkage 4 and raising the bonnet 6 from the position in which it covers the engine compartment towards a raised safety position.

The motor vehicle 1 also comprises a contact sensor device 8, which is positioned on the front bumper 9 of the said motor vehicle 1 to detect any collision with the bumper 9, and which supplies at its output a plurality of contact signals CONT containing a data related to the physical characteristics of the collision, these data being described in greater detail below; and an electronic controller 10, which receives the contact signals CONT supplied by the contact sensor device 8 and outputs an activation signal FIRE for the bonnet movement unit 2, and particularly for the actuator device 7 so as to operate the four-bar linkage device 4 following the detection of a frontal collision of the motor vehicle 1 with a pedestrian 3.

In particular, the contact sensor device 8 comprises a plurality of polymeric piezoelectric sensors 11, for example eight sensors, arranged side by side along the bumper 9 and each supplying a corresponding contact signal CONT. In particular, piezoelectric sensors 11 may be either incorporated in the bumper 9, or arranged on the outer surface of the bumper 9 and covered by a protective mask, or yet arranged on the inner surface of the bumper 9.

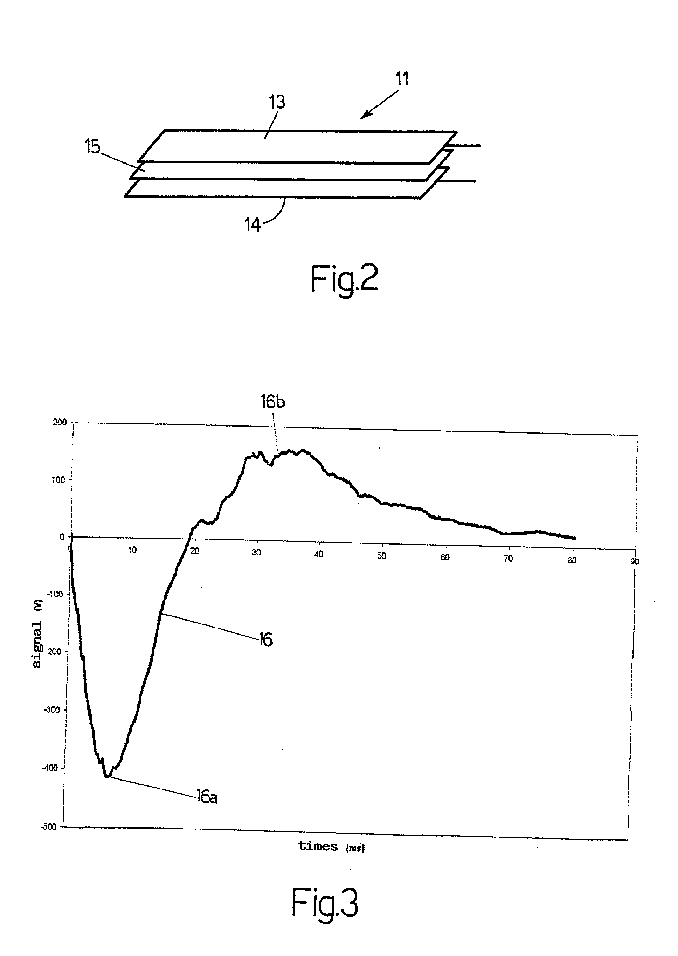

As shown in Figure 2, each piezoelectric sensor 11 comprises a first and a second electrode, formed respectively from a first and a second flat plate 13 and 14 positioned parallel to each other and provided with corresponding output terminals, and an inner layer 15 of polymeric material interposed between the said first and second plates 13 and 14.

In detail, each piezoelectric sensor 11 has dimensions such that the position and extension of the impact on the bumper 9 can be discriminated in such a way that it is possible to determine whether the said impact has been caused by a pedestrian or by other objects.

In the present case, each piezoelectric sensor 11 preferably has a length equal to 1/8 or 1/16 of the whole length of the bumper 9, in such a way that a high definition of the identification of the impact area is provided.

In greater detail, the piezoelectric sensors 11 can be designed in such a way that each sensor preferably, but not necessarily, has a length of 8 - 16 cm and a width of 2 - 3 cm, and the sensors can be distributed along the perimetric edge of the bumper 9 (Figure 1) with intervals of 2 - 3 cm between them.

In the present case, the first and second plates 13 and 14 can be made from electrically conductive material, while the inner layer 15 is made from PDVF polymeric material having the characteristic of generating a voltage signal when a mechanical stress is applied to it, or when it is subjected to a deformation of the mechanical type due, for example, to a stretching of the piezoelectric sensor 11.

Figure 3 shows an example of a graph showing the variation with time of the contact signal CONT, indicated by the number 16, outputted by the piezoelectric sensor 11 as a result of a mechanical stress caused by an object impacting the said piezoelectric sensor 11 at a velocity of approximately 40 km/hr. In the illustrated example, the piezoelectric sensor 11, when subjected to a mechanical stress characterized by a potential energy having a variation of an essentially impulsive kind, outputs, after a limited response time (delay), a voltage signal having a first negative voltage pulse 16a containing a plurality of data characterizing the said collision, and followed by a second voltage pulse 16b, which has a smaller amplitude than the first pulse 16a and is a result of the deformation of the piezoelectric sensor 11 caused by the elastic recovery of the bumper 9 following the impact.

By processing the first pulse 16a of the contact signal CONT caused by the mechanical stress a number of parameters characterizing the collision can be determined, such as the energy, the duration, and the velocity. In particular, the energy of the collision is directly proportional to the maximum amplitude of the first voltage pulse 16a, and can therefore be calculated directly by integration of the contact signal CONT in the course of the duration of the first pulse 16a; the duration of the collision is essentially equal to the duration of the first voltage pulse 16a, while the velocity of the collision can be determined from the derivative of the rising gradient of the first voltage pulse 16a.

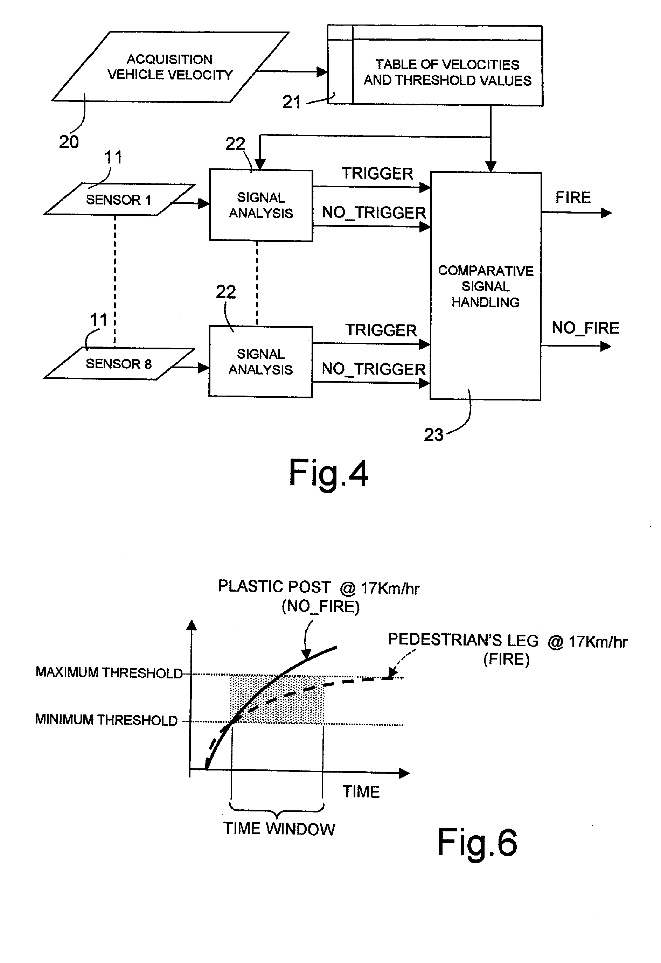

The parameters characterizing the collision can be computed by the electronic control unit 10 by processing the contact signals CONT supplied by the piezoelectric sensors 11 in the way described in detail below with reference to the flowcharts shown in Figures 4 - 7, in order to determine whether the collision has been caused by an impact of the motor vehicle 1 against a pedestrian 4 or by an impact against other objects.

The specific adjacent distribution of the piezoelectric sensors 11 in the bumper 9 shown in Figure 1 enables the electronic control unit 10 to locate precisely the area of the bumper 9 affected by the collision. In particular, the piezoelectric sensors 11 arranged at the sides of the piezoelectric sensor 11 subjected to the impact are affected by the elastic deformation of the bumper 9 caused by the impact, and consequently output a contact signal CONT having a first voltage pulse with a non-zero amplitude which is lower than the maximum amplitude of the first voltage pulse of the contact signal CONT supplied by the impacted piezoelectric sensor 11. This difference between the amplitudes of the first voltage pulses of the contact signals CONT therefore represents the useful information that enables the electronic control unit 10 to distinguish the piezoelectric sensor 11 directly affected by the collision, and therefore to determine the position at which the impact has occurred on the bumper 9.

In order to determine whether the collision on the bumper 9 has originated from the impact of the motor vehicle 1 against a pedestrian 3, in which case the bonnet movement unit 2 must be activated, or has originated from collisions of another kind, in which case the bonnet movement unit 2 must not be activated, the electronic control unit 10 processes the contact signals CONT supplied by the different piezoelectric sensors 11 in the way described in detail below with reference to the flowcharts shown in Figures 4 - 7.

In particular, the electronic control unit 10 implements an algorithm for processing the signal on two levels: initially, it carries out local processing of each individual contact signal CONT to determine whether or not each piezoelectric sensor 11 has been affected by a collision and whether the detected collision could or could not belong to a category of collisions that requires the activation of the bonnet movement unit 2, and accordingly generates a logic signal indicating the situation detected; it then carries out general processing of all the logic signals obtained from the initial processing, to determine whether the collision on the bumper 9 is of the type requiring the activation of the bonnet movement unit 2, in other words has originated from the impact of the motor vehicle 1 against a pedestrian 3, in which case it generates the activation signal FIRE for the bonnet movement unit 2.

Additionally, the activations of the bonnet movement unit 2 are strictly limited by the velocity of the motor vehicle, and therefore the general processing of the various logic signals generated as a result of the local processing is carried out, in a continuous cycle, only if the velocity of the motor vehicle lies within a range of values specified previously according to various factors, including the type of bonnet movement unit 2 with which the motor vehicle 1 is equipped.

More specifically, it has been found experimentally that it is appropriate to carry out the general processing for velocities of the motor vehicle within the approximate range of 17 to 60 km/hr. This is because it is useless to activate the bonnet movement unit 2 at excessively low or excessively high speeds, since in the first case it is highly improbable that a low-velocity collision will cause the pedestrian to fall and thus to strike the bonnet, and in any case the energy exchanged between the motor vehicle and the pedestrian in a low-velocity collision is small and therefore the risk of brain damage in the pedestrian due to his impact against the bonnet is relatively low, while, in the second case, a pedestrian who is struck at excessively high speeds will follow trajectories which do not cause his skull to collide with the bonnet, and in any case at high velocities the actuation times of the bonnet movement unit 2 become critical, leading to a risk of causing an impact between the pedestrian's skull and the bonnet while the latter is still being raised, thus ultimately increasing the energy exchanged between the pedestrian and the bonnet and thereby possibly causing more serious brain damage.

The algorithm implemented by the control unit 10 to execute the functions described above can be represented conceptually in the form of the block diagram in Figure 4.

According to figure 4, the algorithm comprises a block 20 for acquisition of the velocity of the motor vehicle; a table 21 receiving the velocity of the motor vehicle supplied by the block 20 for acquisition of the velocity of the motor vehicle, and storing, as a function of the velocity of the motor vehicle, a set of threshold values used by the algorithm; a plurality of signal analysis blocks 22, one for each of the piezoelectric sensors 11, each of which receives the contact signal CONT generated by the corresponding piezoelectric sensor 11 and outputs a first and a second logic local signal TRIGGER and NO_TRIGGER generated as a function of the corresponding contact signal CONT in the way described in detail below; and a comparative signal handling block 23, receiving the logic local signals TRIGGER and NO_TRIGGER generated by the various signal analysis blocks 22 and outputting a first and a second logic global signal FIRE and NO-FIRE generated as a function of the logic signals TRIGGER and NO_TRIGGER in the way described in detail below, where the first logic global signal FIRE constitutes the aforementioned activation signal FIRE for the bonnet movement unit 2.

In particular, the logic local signal TRIGGER generated by a signal analysis block 22 indicates that the corresponding piezoelectric sensor 11 has been affected by a collision and that this collision could belong to a category of collisions that requires the activation of the bonnet movement unit 2, while the logic local signal NO_TRIGGER generated by a signal analysis block 22 indicates that the corresponding piezoelectric sensor 11 has been affected by a collision, but that this collision belongs to a category of collisions that does not require the activation of the bonnet movement unit 2.

The logic global signal FIRE generated by the comparative signal handling block 23 indicates that the bonnet movement unit 2 must be activated, while the logic global signal NO_FIRE generated by the comparative signal handling block 23 indicates that the bonnet movement unit 2 must not be activated. In fact, it would also be possible to dispense with the generation of the latter logic signal, but this signal contains information (that a collision has occurred without the necessity of activating the bonnet movement unit 2) generated by the algorithm that could be used by other algorithms implemented by the electronic control unit 10 and operating up-line from that described here.

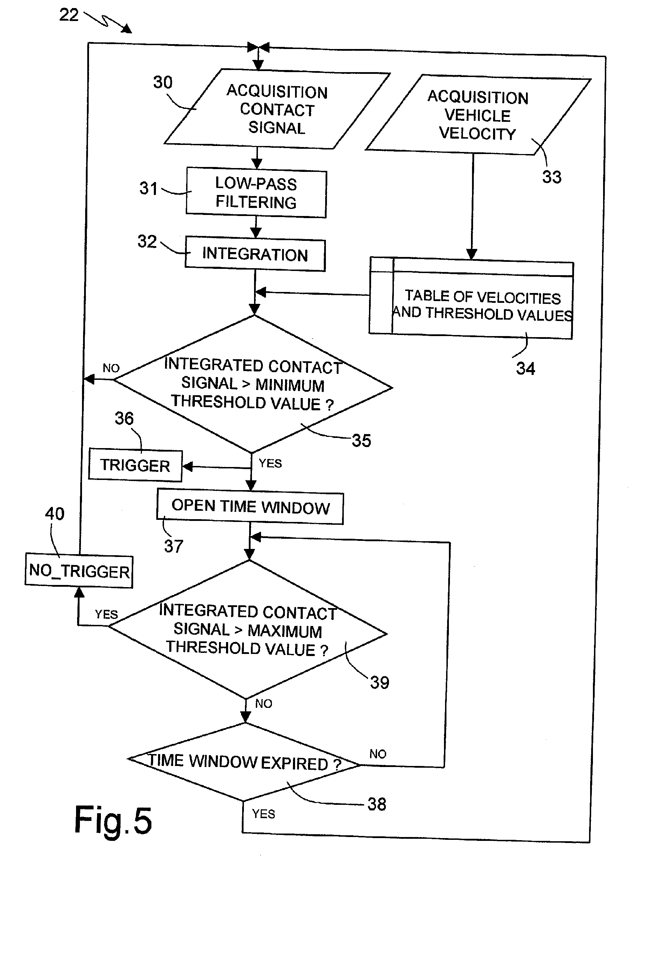

Figure 5 shows a flowchart relating to the operations implemented by a signal analysis block 22 of Figure 4.

According to figure 5, the contact signal CONT supplied by the corresponding piezoelectric sensor 11 (block 30) is first acquired, and this signal is passed through a low-pass filter to remove any vibrational components (block 31), and then integrated by an infinite time integration algorithm with a damping time constant such that the contributions of signals remote in time are cut off, in such a way as to avoid possible risks of integral drift and to eliminate the effects of noise and/or spikes from the chaotic behavior and from the zero mean (block 32).

At the same time, the velocity of the motor vehicle is acquired (block 33), and minimum and maximum threshold values associated with the velocity of the motor vehicle acquired in block 33 are read from table 21 of Figure 4 (block 34).

The integrated contact signal is then compared, in succession, with the minimum threshold value and the maximum threshold value acquired in block 34.

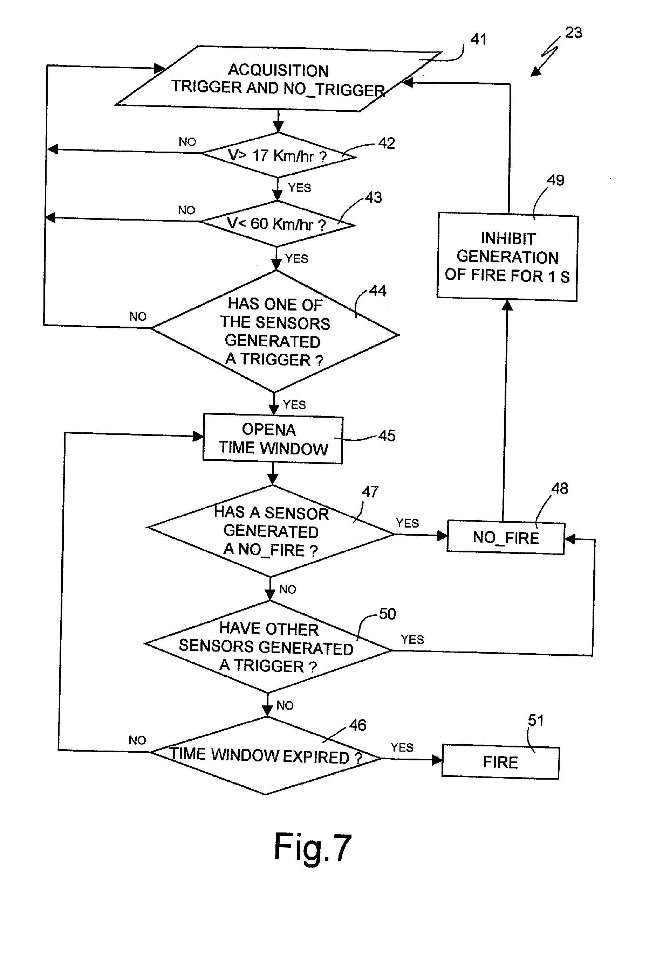

This double comparison is based on the applicant's experimental finding that, as shown in Figure 6, the modulus of the integral of a contact signal generated after a collision with a pedestrian shows a rise in time smaller than that which would be present in case of a collision with a solid object such as a post, wall or vehicle.

The integrated contact signal is therefore initially compared with the minimum threshold value to determine whether it exceeds it (block 35). If the integrated contact signal does not exceed the minimum threshold value ("NO" output of block 35), the procedure restarts from block 30, but if the integrated contact signal does exceed the minimum threshold value ("YES" output of block 35) the logic local signal TRIGGER is generated (block 36) and at the same time a monitoring time window is opened, with a duration of several milliseconds, depending on the velocity of the motor vehicle (blocks 37 and 38), and within this time window a check is made as to whether the integrated contact signal also exceeds the maximum threshold (block 39). If the integrated contact signal exceeds the maximum threshold within the time window ("YES" output of block 39), the collision is considered to have been with a solid object such as a post, a wall or a vehicle, and therefore the logic local signal NO_TRIGGER is also generated (block 40) and the procedure restarts from block 30, whereas if the integrated contact signal does not exceed the maximum threshold within the time window ("NO" output of block 39), the procedure restarts from block 30.

Finally, Figure 7 shows a flowchart relating to the operations executed by the comparative signal handling block 23 of Figure 4.

According to figure 7, the logic local signals TRIGGER and NO_TRIGGER generated by the various signal analysis blocks are initially acquired, together with the velocity of the motor vehicle and the minimum and maximum velocity values delimiting the range of values within which the bonnet movement unit 2 can be activated (block 41).

The velocity of the motor vehicle is then compared with the minimum and maximum velocity values (blocks 42 and 43). If the velocity of the motor vehicle does not fall within the range of values in which the bonnet movement unit 2 can be activated, this range being from 17 km/hr to 60 km/hr in the present example ("NO" output of blocks 42 and 43), then the comparison of the logic local signals TRIGGER and NO_TRIGGER is not enabled and the procedure restarts from block 41, whereas if the velocity of the motor vehicle falls within the range of values in which the bonnet movement unit 2 can be activated ("YES" output of blocks 42 and 43), then the comparison of the logic local signals TRIGGER and NO_TRIGGER is enabled and a check is then made as to whether one of the signal analysis blocks 22 has generated a logic local signal TRIGGER (block 44).

If none of the signal analysis blocks 22 has generated a logic local signal TRIGGER ("NO" output of block 44), then there have been no collisions that could require the activation of the bonnet movement unit 2, and therefore the procedure restarts from block 41, whereas if one of the signal analysis blocks 22 has generated a logic local signal TRIGGER ("YES" output of block 44), then there has been a collision that could require the activation of the bonnet movement unit 2, and therefore a time window is opened, with a duration of several milliseconds, which again depends on the velocity of the motor vehicle (blocks 45 and 46), within which a check is made as to the types of logic local signals that have been generated by the other signal analysis blocks 22.

In particular, a check is initially made as to whether one of the other signal analysis blocks 22 has generated a logic local signal NO_TRIGGER within the time window (block 47).

If one of the other signal analysis blocks 22 has generated a logic local signal NO TRIGGER within the time window ("YES" output of block 47), then the logic general signal NO_FIRE is generated (block 48) and the generation of the logic global signal FIRE is inhibited for a specified time, for example one second, to prevent secondary collisions or piezoelectric sensors 11 excited as a result of vibration of the bumper 9 from incorrectly activating the bonnet movement unit 2 (block 49), but if none of the other signal analysis blocks 22 has generated a logic local signal NO_TRIGGER within the time window ("NO" output of block 47), then a check is made as to whether other signal analysis blocks 22 have generated a logic local signal TRIGGER within the time window (block 50).

If other signal analysis blocks 22 have generated a logic local signal TRIGGER within the time window ("YES" output of block 50), then the collision is considered to have been with a wide object (and therefore not a pedestrian), and therefore the logic general signal NO_FIRE is generated (block 48) and the generation of the logic global signal FIRE is inhibited for a specified time (block 49), whereas if no other signal analysis block 22 has generated a logic local signal TRIGGER within the time window ("NO" output of block 50), then the checks described above with reference to blocks 36 and 39 are continued until the time window expires ("NO" output of block 46). If the time window expires without any detection of the generation of a logic local signal NO_TRIGGER ("YES" output of block 46), then the collision is considered to have been with a narrow object (and therefore probably a pedestrian) and the logic general signal FIRE is therefore generated, thus causing the activation of the bonnet movement unit 2 (block 51).

According to a further aspect of the present invention, and in addition to what has been described above, it may be optionally provided a bidirectional pedestrian-vehicle communication system for supporting and verifying the information which has been obtained by the electronic control unit 10 by processing the contact signal CONT supplied by the contact sensor device 8.

In particular, the bidirectional communication system can detect the presence of a pedestrian 3 in the immediate vicinity of the motor vehicle 1 in such a way that the activation of the bonnet movement unit 2 is disabled when, despite the electronic control unit 10 has detected a collision of a pedestrian 3 against bumper 9 of the motor vehicle 1 on the basis of the information provided by the contact sensor device 8, no pedestrian 3 is present in the immediate vicinity of the motor vehicle 1.

With reference to Figure 1, the bidirectional communication system, indicated as a whole by the number 52, comprises a transceiver device 53 carried by the pedestrian 3 and a transceiver device 54 which is located in the motor vehicle 1 and can establish bidirectional communication with the transceiver device 53.

In particular, the transceiver device 54 is connected to the electronic control unit 10 to provide a bidirectional data exchange, in such a way as to enable the electronic control unit 10 to detect the presence of a pedestrian 3 in the vicinity of the motor vehicle 1.

The transceiver device 54 is of a known type and can transmit an encoded interrogation signal having intensity with significant values which can be read by the transceiver device 53 carried by the pedestrian 3, at a distance of at least one or two meters from the motor vehicle 1.

The transceiver device 53 carried by the pedestrian 3 is also of a known type and can preferably consist of a passive transponder, in other words one not powered by batteries, which is activated following the reception of the interrogation signal transmitted by the transceiver device 54 present in the motor vehicle 1.

In particular, after the transceiver device 53 has been activated it can transmit around the pedestrian 3, in response to the received signal, an encoded recognition signal having intensity with significant values which can be read at a distance of at least one or two meters by the transceiver device 53.

The transceiver device 53 can be incorporated preferably, but not necessarily, in an electronic identity card or in an electronic identity document, which contains information about the pedestrian 3 and is normally carried by him.

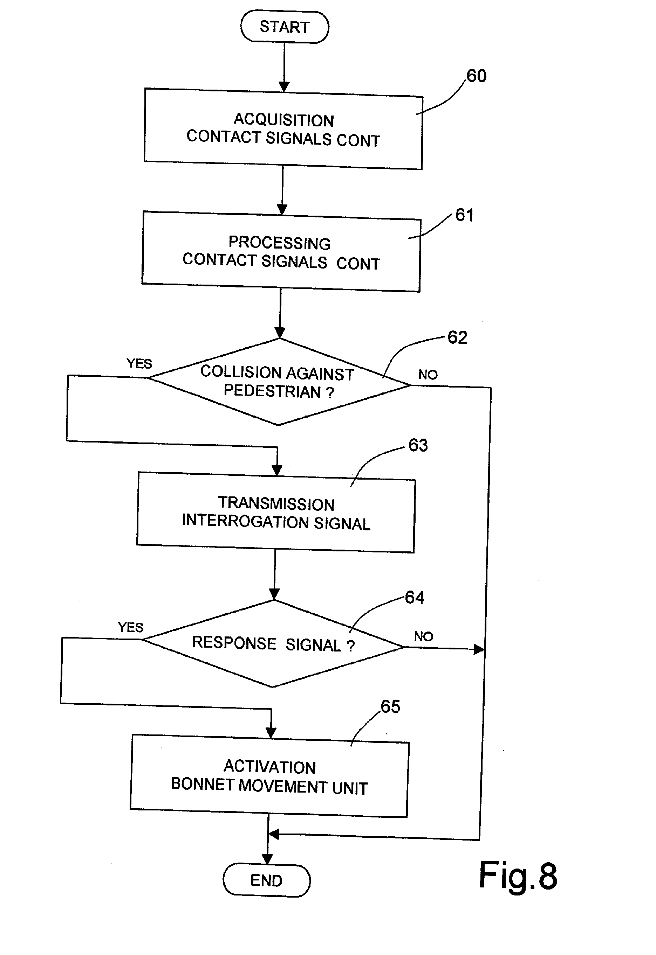

Figure 8 shows a flowchart of the operations implemented by the electronic control unit 10 when the bidirectional communication system 60 described above is provided.

It is assumed that the contact sensor device 8 has detected a collision against the bumper 9 of the motor vehicle 1 and that the contact signals CONT generated by the contact sensor device 8 have been acquired by the electronic control unit 10 (block 60).

The contact signals CONT are then processed as previously described in detail with reference to the flowcharts shown in Figures 4-7, in order to determine whether or not the collision has occurred against a pedestrian, and therefore whether or not the bonnet movement unit 2 must be activated (block 61).

If the electronic control unit 10 determines that the collision does not seem to be occurred against a pedestrian ("NO" output of block 62), then the procedure ends, whereas if the electronic control unit 10 determines that the collision seems to be occurred against a pedestrian ("YES" output of block 62), then transceiver device 54 is activated so as to transmit an interrogation signal in the vicinity of the motor vehicle 1 (block 63).

Electronic control unit 10 waits for a response signal that may be sent by the transceiver device 53 in the vicinity of the motor vehicle 1 (block 64).

If a response signal is received ("YES" output of block 64) indicating that a pedestrian 3 is present in the immediate vicinity of the motor vehicle 1, bonnet movement unit 2 is actually activated (block 65), whereas if no response signal is received within a preset maximum time ("NO" output of block 64) then bonnet movement unit 2 is not activated and the procedure ends.

An examination of the characteristics of the method of controlling the bonnet movement unit provided according to the invention will clearly reveal the advantages that it offers.

In particular, it has been found experimentally that the proposed solution makes it possible to drastically reduce the occurrence of undesired activations of the bonnet movement unit 2.

Finally, it will be evident that the method of controlling the bonnet movement unit described and illustrated herein can be modified and varied without departure from the scope of protection of the present invention, as defined in the attached claims.

For example, the monitoring time windows, as well as the range of velocities within which the logic local signals supplied by the signal analysis blocks are processed, could be different from those described above.

Moreover, the logic local signal NO_TRIGGER could be generated in a different way from that described. This is because the comparison of the integrated contact signal with the maximum threshold value carried out within a time window is effectively equivalent to a comparison carried out on the derivative of the integrated contact signal, which is the same as the contact signal CONT supplied by the piezoelectric sensor 11. Consequently the comparison of the integrated contact signal with the maximum threshold value within the monitoring time window (blocks 47, 48 and 49) could be replaced by a comparison of the contact signal CONT with a specified threshold value indicating the rigidity of the impacted obstacle: if the contact signal CONT also exceeds this specified threshold value, then the collision is considered to have been with a rigid obstacle such as a wall, a post, etc., and therefore the logic local signal NO_TRIGGER is generated, but if the contact signal CONT does not exceed this specified threshold value, then the collision is considered to have been occurred against a pedestrian and therefore the procedure restarts from block 41.

Furthermore, the impact sensors could be different from those described above.

## Claims

1. Method of controlling a bonnet movement unit (2) of a vehicle (1) for the safety of pedestrians in case of collision with a front bumper (9) of said vehicle (1), said bumper (9) being provided with collision sensor means (8) comprising a plurality of sensors (11) positioned along said bumper (9), said method being **characterized in that** it comprises the steps of:
- determining whether a sensor (11) has been affected by a collision that could potentially require the activation of the bonnet movement unit (2) or by a collision that does not require the activation of the bonnet movement unit (2);
- opening a first monitoring time window of specified duration if a sensor (11) has been affected by a collision that could potentially require the activation of the bonnet movement unit (2);
- determining whether other sensors (11) have been affected, within the first monitoring time window, by a collision that could potentially require the activation of the bonnet movement unit (2) or by a collision which does not require the activation of the bonnet movement unit (2); and
- determining whether to activate the bonnet movement unit (2), on the basis of what has been detected within the first monitoring time window.

2. Method according to Claim 1, **characterized in that** the step of determining whether to activate the bonnet movement unit (2) comprises the step of:
- activating the bonnet movement unit (2) if the first monitoring time window expires without other sensors (11) being affected by a collision that does not require the activation of said bonnet movement unit (2) and without other sensors (11) being affected by a collision that could potentially require the activation of said bonnet movement unit (2).

3. Method according to Claim 1 or 2, **characterized in that** it additionally comprises the step of:
- not activating the bonnet movement unit (2) if, within the first monitoring time window, at least one of the other sensors (11) has been affected by a collision that does not require the activation of said bonnet movement unit (2) or at least one of the other sensors (11) has been affected by a collision that could potentially require the activation of said bonnet movement unit (2).

4. Method according to any one of the preceding claims, **characterized in that** said first monitoring time window has a duration that is a function of the velocity of the vehicle.

5. Method according to any one of the preceding claims, **characterized in that** the step of determining whether a sensor (11) has been affected by a collision that could potentially require the activation of said bonnet movement unit (2) comprises the steps of:
- acquiring a contact signal (CONT) generated by said sensor (11);
- integrating the contact signal (CONT);
- comparing the integrated contact signal with a first threshold value; and
- determining whether said sensor has been affected by a collision that could potentially require the activation of said bonnet movement unit (2) as a on the basis of the outcome of the comparison.

6. Method according to Claim 5, **characterized in that** the step of determining whether said sensor (11) has been affected by a collision that could potentially require the activation of the bonnet movement unit (2) on the basis of the outcome of the comparison comprises the step of:
- determining that said sensor (11) has been affected by a collision that could potentially require the activation of the bonnet movement unit (2) if the modulus of the integrated contact signal exceeds the first threshold value.

7. Method according to Claim 5 or 6, **characterized in that** it additionally comprises the steps of:
- opening a second monitoring time window of specified duration if said sensor (11) has been affected by a collision that could potentially require the activation of the bonnet movement unit (2);
- comparing the integrated contact signal with a second threshold value which is greater than the first threshold value;
- determining that the sensor (11) has not been affected by a collision that requires the activation of the bonnet movement unit (2) if the integrated contact signal satisfied a specified relation with the second threshold value within the second monitoring time window.

8. Method according to Claim 7, **characterized in that** said specified relation is defined by the condition that the modulus of the integrated contact signal also exceeds the second threshold value within the expiry of the second monitoring time window.

9. Method according to Claim 7 or 8, **characterized in that** it additionally comprises the step of:
- determining that said sensor (11) has been affected by a collision that requires the activation of the bonnet movement unit (2) if the integrated contact signal does not exceed the second threshold value by the expiry of the second monitoring time window.

10. Method according to any one of Claims 7 to 9, **characterized in that** said second monitoring time window starts in the instant in which the modulus of the integrated contact signal exceeds the first threshold value.

11. Method according to any one of Claims 7 to 10, **characterized in that** said second monitoring time window has a duration which is a function of the velocity of the vehicle.

12. Method according to any one of Claims 7 to 11, **characterized in that** said first and second threshold values are functions of the velocity of the vehicle.

13. Method according to any one of the preceding Claims, **characterized in that** it additionally comprises the steps of:
- detecting the presence of a pedestrian (3) in the immediate vicinity of said vehicle (1); and
- inhibiting the activation of said bonnet movement unit (2) if there is no pedestrian (3) in the immediate vicinity of said motor vehicle (1).

14. Method according to Claim 13, **characterized in that** said detecting the presence of a pedestrian (3) in the immediate vicinity of said vehicle (1) comprises the step of:
- providing said vehicle (1) with first transceiver means (54) and said pedestrian (3) with second transceiver means (53) communicating with said first transceiver means (54).

15. Method according to any one of the preceding Claims, **characterized in that** said sensors (11) are piezoelectric sensors.

16. Method according to any one of the preceding Claims, **characterized in that** said sensors (11) are polymeric piezoelectric sensors.

17. Method according to any one of the preceding Claims, **characterized in that** said sensors (11) are arranged side by side along said bumper (9).

18. Method according to any one of the preceding Claims, **characterized in that** said sensors (11) each comprises a first plate (13) and a second plate (14) both of electrically conductive material, and a polymeric material (15) arranged between said first and second plates (13, 14).

19. Method according to Claim 18, **characterized in that** said polymeric material (15) is of the PVDF type.
